# EUROPÄISCHE PATENTSCHRIFT

(11) **EP 1 698 990 B1**
(45) Veröffentlichungstag und Bekanntmachung des Hinweises auf die Patenterteilung: **06.11.2013**
(21) Anmeldenummer: 06002979.0
(22) Anmeldetag: 14.02.2006
(51) Int. Cl.: G06F 21/00

(54) **Computersystem mit einer Schnittstellenvorrichtung**
Computer system comprising an interface device
Système informatique pourvu d'un dispositif d'interface

(30) Priorität: 01.03.2005 DE 102005009357
(43) Veröffentlichungstag der Anmeldung: 06.09.2006
(73) Patentinhaber: Fujitsu Technology Solutions Intellectual Property GmbH, 80807 München (DE)
(72) Erfinder: Staude, Rainer, 86159 Augsburg (DE); Kastl, Peter, 86529 Schrobenhausen (DE); Markel, Ottwald, 86199 Augsburg (DE)
(74) Vertreter: Epping - Hermann - Fischer

(56) Entgegenhaltungen:
- WO-A-00/34878
- WO-A-99/08422
- DE-A1- 10 021 924
- US-A- 6 101 076
- US-A1- 2003 056 051
- US-B1- 6 279 060

## Beschreibung

Die Erfindung betrifft ein Computersystem mit einer Schnittstellenvorrichtung, aufweisend wenigstens einen Datenanschluss zum Anschluss von Geräten.

Computersysteme mit Schnittstellenvorrichtungen, die Datenanschlüsse aufweisen, sind vielfach bekannt. Zum Beispiel weisen viele Computersysteme eine Schnittstellenvorrichtung mit Anschlüssen für interne und externe Geräte, wie zum Beispiel Speicherkartenleser und Drucker, nach der Universal Serial Bus (USB) Spezifikation auf. Andere Schnittstellenvorrichtungen sind für eine parallele Datenübertragung eingerichtet. Als Standards für serielle oder parallele Datenübertragung sind beispielsweise Centronics, IEEE 1394 (FireWire) oder das Small Computer Systems Interface (SCSI) bekannt.

Datenanschlüsse, die an einer gemeinsamen Schnittstellenvorrichtung betrieben werden, sind dabei in der Regel gemeinsam aktivierbar bzw. deaktivierbar. Dabei wird z.B. die Schnittstellenvorrichtung durch das BIOS des Computersystems angewiesen, sich zu deaktivieren. Unter Umständen bleibt es dabei jedoch möglich, eine so deaktivierte Schnittstellenvorrichtung durch Aussenden einer gegenteiligen Mitteilung durch ein Betriebssystem des Computersystems wieder zu aktivieren. Zum Beispiel ist von dem Betriebssystem Linux bekannt, eine Schnittstellenvorrichtung gemäß der USB-Spezifikation direkt anzusprechen, so dass diese auch dann verwendet werden kann, wenn sie im BIOS deaktiviert wurde.

Auch können in der Regel nicht einzelne Datenanschlüsse durch das BIOS des Computersystems deaktiviert werden, wenn sie an einer gemeinsamen Schnittstelleneinrichtung wie beispielsweise einem USB-Controller betrieben werden.

Aus der US 2003/0056051 A1 ist ein Verfahren und ein System zum Steuern des Hinzufügens von USB-Geräten an ein Host-Computersystem mittels einer Hardware Hot-Plug-Erkennungsschaltung bekannt. Wird der Anschluss eines neuen Gerätes erkannt, wird ein Steuersignal über eine System Management Interrupt (SMI) Leitung an die CPU geschickt, um einen System Management Mode (SMM) zu aktivieren.

Aus der DE 100 21 924 A1 ist eine USB-Vorrichtung bekannt, die eine Verbindung mit und eine Trennung von einem USB-Bus ohne physikalisches Entfernen oder Neueinfügen des USB-Kabels signalisiert. Hierzu wird eine Verbindung von einer USB-Datenleitung durch einen pull-up Widerstand zu einer positiven Versorgungsspannung verwendet.

Computersysteme enthalten oft Daten, die nicht durch einen Benutzer des Computersystems auf ein externes Speichermedium übertragen werden sollen. Beispiele hierfür sind z.B. geheime Entwicklungsunterlagen am Arbeitsplatz oder urheberrechtlich geschütztes Material auf öffentlich zugänglichen Computersystemen. Solche Computersysteme weisen in der Regel keine dem Benutzer zugängliche Speicherlaufwerke auf. Durch die zunehmende Verbreitung von kleinen, mobilen Speicherlaufwerken reicht jedoch das Vorhandensein eines Datenanschlusses zum Kopieren der Daten aus. Beispielsweise kann ein Benutzer einen sogenannten USB Memory Stick, einen nichtflüchtigen Massenspeicher, an einen extern zugänglichen Anschluss einer USB Schnittstellenvorrichtung anschließen, sodass er nachfolgend Daten von dem Computersystem auf den USB Memory Stick übertragen kann.

Aufgabe der Erfindung ist es daher, ein Computersystem mit einer Schnittstellenvorrichtung zu beschreiben, bei der einzelne Datenanschlüsse zum Anschluss von Geräten deaktiviert werden können, wobei Geräte weiterhin verwendet werden können, die an einen anderen Datenanschluss derselben Schnittstellenvorrichtung angeschlossen sind.

Die Aufgabe wird erfindungsgemäß durch ein Computersystem der eingangs genannten Art gelöst, das durch eine Schaltungsanordnung gemäß Patentanspruch 1 gekennzeichnet ist, durch die der wenigstens eine Datenanschluss deaktivierbar ist.

Die Erfindung macht sich eine Schaltungsanordnung zu Nutze, mit der einzelne Datenanschlüsse gezielt deaktiviert werden können. Dabei ist die Schaltungsanordnung derart eingerichtet, dass Befehle eines Betriebssystems an die Schnittstellenvorrichtung die Funktion der Schaltungsanordnung nicht aufheben können.

In einer bevorzugten Ausgestaltung der Erfindung wird ein BIOS des Computersystems dazu verwendet, die Deaktivierung der einzelnen Datenanschlüsse vorzunehmen. Dabei weist das BIOS vorzugsweise einen Sicherungsmechanismus wie z.B. einen Passwortschutz auf, sodass nur berechtigte Personen eine Änderung der Einstellungen vornehmen können.

In einer weiteren bevorzugten Ausführung überwacht das BIOS die Ansteuerung der Schaltungsanordnung und unterbindet einen Zugriff auf die Schaltung durch ein Betriebssystem oder andere Programme des Computersystems.

Alternativ kann die Steuerung der Schaltungsanordnung auch durch ein auf dem Computersystem vorhandenen Betriebssystem gesteuert werden. In diesem Fall muss durch das Betriebssystem sichergestellt werden, dass nur berechtigte Personen die einzelnen Datenanschlüsse deaktivieren bzw. aktivieren können. Eine solche Lösung kann beispielsweise unter Verwendung von Betriebssystemen verwirklicht werden, die unterschiedliche Rechte für einfache Benutzer und Administratoren des Computersystems vorsehen. Dabei kann das Computersystem beispielsweise so eingerichtet sein, dass es nur den besonders berechtigten Administratoren möglich ist, die Schaltungsanordnung zu steuern.

Weitere Einzelheiten und Ausgestaltungen der Erfindung sind in den Unteransprüchen angegeben.

Die Erfindung wird nachfolgend an einem Ausführungsbeispiel anhand der Zeichnungen näher erläutert. In den Zeichnungen zeigen:
Figur 1 eine schematische Anordnung eines Computersystems mit einer erfindungsgemäßen Schnittstellenvorrichtung,
Figur 2 eine beispielhafte Schaltung umfassend zwei erfindungsgemäße Schaltungsanordnungen,
Figur 3 ein Ablaufdiagram für ein Verfahren zur Datenübertragung.

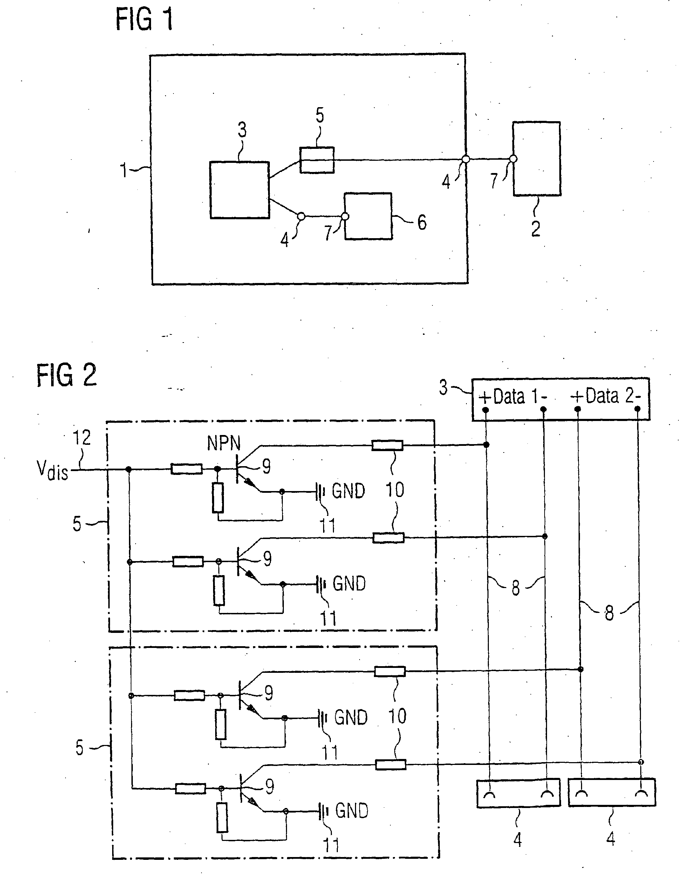

Figur 1 zeigt eine beispielhafte Anordnung bestehend aus einem Computersystem 1 und einem externen Gerät 2. Das Computersystem 1 beinhaltet eine Schnittstellenvorrichtung 3. Die Schnittstellenvorrichtung 3 bedient zwei Datenanschlüsse 4. Der erste Datenanschluss 4 ist direkt mit der Schnittstellenvorrichtung 3 verbunden, während der zweite Datenanschluss 4 über eine Schaltungsvorrichtung 5 mit der Schnittstellenvorrichtung 3 verbunden ist. Zusätzlich umfasst das Computersystem 1 ein internes Gerät 6, das über eine Schnittstelle 7 mit dem ersten Datenanschluss 4 verbunden ist. Auch das externe Gerät 2 verfügt über eine Schnittstelle 7, über die das externe Gerät 2 mit dem zweiten Datenanschluss 4 verbunden ist.

Ist eine Datenübertragung von dem Computersystem 1 zu dem externen Gerät 2 unerwünscht, so kann eine Datenübertragung durch die Schaltungsanordnung 5 verhindert werden. Dabei bleibt das interne Gerät 6, das an derselben Schnittstellenvorrichtung 3 betrieben wird, einsatzbereit.

Ein Computersystem 1 kann dabei nicht nur ein üblicher Personalcomputer (PC), Notebook oder ein Großrechner sein, sondern auch eine andere Datenverarbeitungseinrichtung, die über eine Schnittstellenvorrichtung 3 mit Datenanschlüssen 4 verfügt. Beispielsweise kann die Erfindung bei allen Geräten zur Datenkommunikation wie zum Beispiel Routern, Repeatern, Hubs oder Telefonanlagen eingesetzt werden.

Geräte 2 oder 6 mit einer Schnittstelle 7 gemäß der USB Spezifikation signalisieren ihren Anschluss an eine Schnittstellenvorrichtung 3 durch Anheben einer Signalspannung auf einer von zwei Datenleitungen 8 zur differentiellen Datenübertragung. Geräte 2 oder 6, die der USB-Spezifikation für Geräte mit hoher Geschwindigkeit entsprechen, heben dabei die Signalspannung der ersten Datenleitung 8 an, während Geräte 2 oder 6, die der USB-Spezifikation für Geräte mit niedrigen Geschwindigkeit entsprechen, die Signalspannung der zweiten Datenleitung 8 anheben. Die Anhebung der Signalspannung geschieht durch Verbinden der Datenleitung 8 mit einem vorbestimmten Spannungspotential über einen sogenannten "pull up" Widerstand. Gleichzeitig sind beide Datenleitungen 8 auf der Seite der Schnittstellenvorrichtung 3 über einen sogenannten "pull down" Widerstand mit dem Massepotential verbunden. Da der "pull down" Widerstand einen wesentlich höheren elektrischen Widerstand aufweist als der "pull up" Widerstand, steigt der Signalpegel auf der entsprechenden Datenleitung 8 beim Anschluss eines Gerätes 2 oder 6 über einen vorbestimmten Wert in Größenordnung des vorbestimmten Spannungspotentiales an. Dieser Anstieg des Spannungspegel der Datenleitungen 8 kann durch die Schnittstellenvorrichtung 3 erkannt werden, die eine Differenzverstärkung zwischen den Datenleitungen 8 durchführt und überwacht, sodass weitere Maßnahmen für eine nachfolgende Datenübertragung zu dem angeschlossenen Gerät 2 oder 6 durchgeführt werden können.

Figur 2 zeigt eine mögliche Schaltung umfassend zwei Schaltungsanordnungen 5, die zum Deaktivieren von je einem von zwei Datenanschlüssen 4, die an einer gemeinsamen Schnittstellenvorrichtung 3 betrieben werden, geeignet sind. Jeder Datenanschluss 4 umfast zwei Datenleitungen 8, die zusammen zur differentiellen Signalisierung genutzt werden, wie dies beispielsweise gemäß der oben beschriebenen USB Spezifikation vorgesehen ist. Jede der Datenleitungen 8, ist dabei über einen Transistor 9 und einen Widerstand 10 an ein Massepotential 11 angeschlossen. Der Widerstand 10 besitzt dabei einen um ein vielfaches geringeren elektrischen Widerstand als der "pull up" Widerstand eines Gerätes 2. Beim Anschluss eines Gerätes 2 an einen Datenanschluss 4 und gleichzeitig geschaltetem Transistor fällt ein Großteil der Spannung zwischen dem vorbestimmten Spannungspotential und dem Massepotential daher an dem "pull up" Widerstand des angeschlossenen Gerätes 2 ab. Folglich erreicht die Signalspannung auf der entsprechenden Datenleitung 8 nicht den vorbestimmte Wert, sodass der Anschluss des Gerätes 2 durch die Schnittstellenvorrichtung 3 auch nicht erkannt werden kann. Daher kann das angeschlossene Gerät 2 auch keinen Datenaustausch mit dem Computersystem 1 durchführen.

Die Schaltungsanordnungen 5 besitzen die vorteilhafte Eigenschaft, dass die Datenleitungen 8 zwischen der Schnittstelleneinrichtung 3 und den Datenanschlüssen 4 nicht unterbrochen werden müssen. Eine Unterbrechung der Datenleitungen 8, z.B. durch Einschleifen eines Transistors in die Datenleitung 8, würde eine Kommunikation bei unbeschalteter Steuerleitung des Transistors zwar auch verhindern, bei geschaltetem Transistor die Signalübertragungseigenschaften der Datenleitung 8 aber negativ beieinträchtigen. Dies ist insbesondere bei hohen Datenübertragungsraten, beispielsweise gemäß der USB 2.0 Spezifikation, nachteilig.

In dem in Figur 2 dargestellten Ausführungsbeispiel sind die beiden Schaltungsanordnungen 5 und damit die Steueranschlüsse aller Transistoren 9 an eine gemeinsame Steuerleitung 12 angeschlossen. Hierdurch wird bewirkt, dass die beiden dargestellten Datenanschlüsse 4 nur zusammen aktiviert bzw. deaktiviert werden können.

Alternativ kann auch jeweils eine Steuerleitung 12 je zu überwachenden Datenanschluss 4 bzw. je vorhandener Schaltungsanordnung 5 vorgesehen sein, sodass eine separate Ansteuerung eines jeden Datenanschlusses 4 bzw. einer jeden Schaltungsanordnung 5 möglich ist.

Anstelle der gezeigten Schaltungsanordnung 5, die den Signalpegel der Datenleitungen 8 in die Nähe des Massepotential 11. herabsenkt, kann bei einer anders ausgestalteten Schnittstellenvorrichtung auch eine solche Schaltungsanordnung 5 verwendet werden, bei der der Signalpegel der Datenleitungen 8 in die Nähe des vorbestimmtes Spannungspotential angehoben wird.

Durch die eine bzw. andere Ausführung der Schaltungsanordnung 5, kann ein Überschreiten bzw. Unterschreiten eines vorbestimmten Signalpegels auf der Datenleitung 8 unterbunden werden. Eine solche Überschreitung bzw. Unterschreitung des Signalpegels der Datenleitung 8 wird dabei wie oben detailliert beschrieben beispielsweise zur Signalisierung neu angeschlossener Geräte 2 verwendet. Wird eine solche Signalisierung durch die Schaltungsanordnung 5 unterbunden, kann die Schnittstellenvorrichtung 3 auch nicht den Anschluss neuer Geräte 2 erkennen, sodass eine Datenübertragung zwischen dem Computersystem 1 und dem Gerät 2 unmöglich ist.

Selbstverständlich kann eine Beeinträchtigung des Signalpegels einer Datenleitung 8 auch zur bewussten Störung einer Datenübertragung eingesetzt werden, beispielsweise wenn die Schnittstellenvorrichtung 3 keine Signalisierung neu angeschlossener Geräte 2 vorsieht. Durch Anschaltung des Widerstandes 10 an die Datenleitungen 8 fällt ein Großteil der Signalspannung auf Seiten des Gerätes 2 ab und nicht an der Schnittstellenvorrichtung 3, sodass eine störungsfreie Datenübertragung zwischen dem Gerät 2 und der Schnittstellenvorrichtung 3 nicht mehr möglich ist.

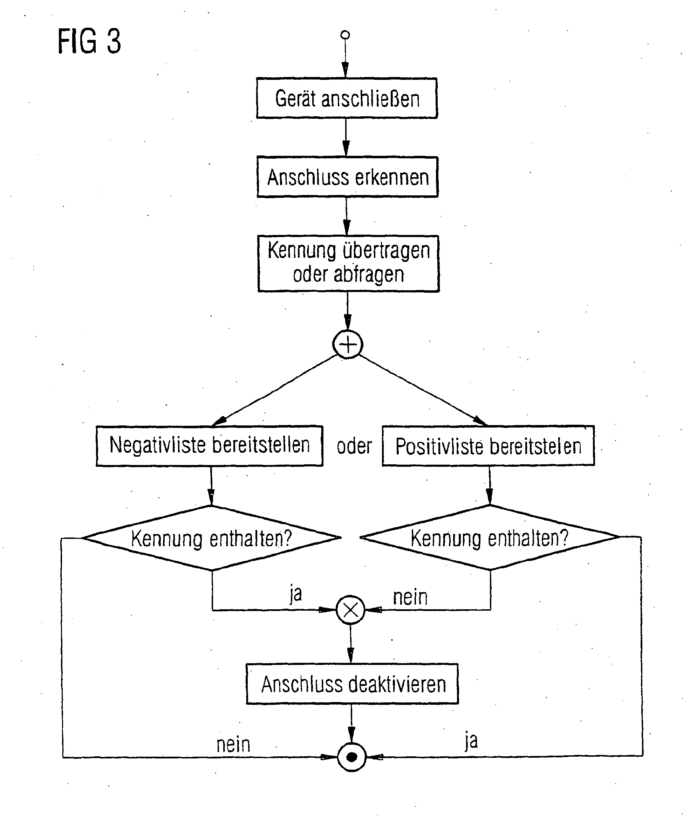

Figur 3 zeigt ein Ablaufdiagram für ein Verfahren zur Datenübertragung, bei dem die erfindungsgemäße Schaltungsanordnung 5 auch in einem elektrischen Vermittlungsgerät mit einer Schnittstellenvorrichtung 3 und Datenanschlüssen 4 zur gezielten Abschaltung einzelner Datenanschlüsse 4 eingesetzt werden kann. Beispielsweise wäre ein Einsatz in einem Verteiler oder Hub, an das mehrere externe Geräte 2 angeschlossen sind, möglich. Selbstverständlich kann es sich bei dem Vermittlungsgerät auch um ein Computersystem 1 mit mehreren Datenanschlüssen 4 handeln. Dabei wird die erfindungsgemäße Schaltungsanordnung 5 des Vermittlungsgerätes zur dynamischen Deaktivierung von Datenanschlüssen 4 eingesetzt. Hierzu ist es notwendig, dass ein neu angeschlossenes Gerät 2 beim Verbinden mit der Schnittstellenvorrichtung 3 eine Kennung an die Schnittstellenvorrichtung 3 überträgt oder eine solche Kennung durch die Schnittstellenvorrichtung 3 von dem Gerät 2 abgefragt wird. Dabei wird eine von einem Gerät 2 empfangene oder abgefragte Kennung durch das Vermittlungsgerät auf Gültigkeit überprüft. Dabei kann die Überprüfung beispielsweise durch eine Vorrichtung der Schnittstellenvorrichtung 3 erfolgen oder durch eine Steuer-Software, beispielsweise durch einen Treiber eines Betriebssystems eines als Vermittlungsgerät eingesetzten Computers.

Dies kann beispielsweise durch Verwendung einer Positivliste oder Verwendung einer Negativliste vorgenommen werden. Dabei sind in einer Positivliste Kennungen von Geräten 2 eingetragen, die mit dem Vermittlungsgerät verwendet werden dürfen. Bei der alternativen Verwendung einer Negativliste sind die Kennungen von Geräten 2 verzeichnet, die nicht mit dem Vermittlungsgerät verwendet werden dürfen.

Die eingesetzte Kennung kann beispielsweise eine eindeutige Gerätekennung für das Gerät 2 sein. In diesem Fall kann jedes Gerät 2 einzeln zum Anschluss berechtigt oder davon ausgenommen sein. Alternativ kann auch eine Kennung für eine Klasse von Geräten 2 eingesetzt werden. Hierdurch wird es z.B. möglich, sämtliche Geräte 2 einer gemeinsamen Geräteklasse, wie z.B. Massenspeichern, von der Benutzung an einem Datenanschluss 4 auszuschließen. Solche Geräteklassen sind zum Beispiel in der USB Spezifikation vorgesehen und deshalb bei jedem Gerät gemäß dieser Spezifikation vorhanden und durch eine Schnittstellenvorrichtung abfragbar.

Erkennt das Vermittlungsgerät, dass ein neu angeschlossenes Gerät 2 nicht zum Anschluss an das Vermittlungsgerät berechtigt ist, wird der Datenanschluss 4, von dem die Kennung des neu angeschlossenen Gerätes 2 empfangen wurde, durch Verwendung der Schaltungsanordnung 5 deaktiviert.

Werden die Positiv- bzw. die Negativlisten über ein Datennetzwerk an alle daran angeschlossenen Vermittlungsgeräte übertragen, kann sichergestellt werden, dass nur solche Geräte 2 an einem der Vermittlungsgeräte betrieben werden können, die zur Benutzung in dem Datennetzwerk zugelassen sind.

In einer bevorzugten Ausführung des Verfahrens überprüft das Vermittlungsgerät zyklisch die Kennung von an das Vermittlungsgerät angeschlossenen Geräten 2. Dabei werden bereits deaktivierte Datenanschlüsse 4 vorübergehend wieder aktiviert, so dass durch das Vermittlungsgerät ein neu angeschlossenes Gerät 2 erkannt werden kann. Wird ein Anschluss eines zur Datenübertragung zugelassenen Gerätes 2 festgestellt, bleibt der Datenanschluss 4 aktiviert. Wird stattdessen ein Anschluss eines zur Datenübertragung nicht zugelassenen Gerätes 2 festgestellt, wird der Datenanschluss 4 wieder deaktiviert. Umgekehrt können momentan aktive Datenanschlüsse 4, an denen ein zwischenzeitlicher Anschluss von nicht zur Datenübertragung zugelassenen Geräten 2 festgestellt wird, durch Verwendung der Schaltungsvorrichtung 5 deaktiviert werden.

### Bezugszeichenliste

- 1: Computersystem
- 2: externes Gerät
- 3: Schnittstellenvorrichtung
- 4: Datenanschluss
- 5: Schaltungsanordnung
- 6: internes Gerät
- 7: Schnittstelle
- 8: Datenleitung
- 9: Transistor
- 10: Widerstand
- 11: Massepotential
- 12: Steuerleitung

## Patentansprüche

1. Computersystem (1) mit einer Schnittstellenvorrichtung (3), aufweisend wenigstens einen Datenanschluss (4) zum Anschluss von Geräten (2, 6),
sowie eine Schaltungsanordnung (5), durch die der wenigstens eine Datenanschluss (4) deaktivierbar ist, wobei die Schaltungsanordnung (5) zur Deaktivierung des wenigstens einen Datenanschlusses (4) dazu eingerichtet ist, wenigstens eine Datenleitung (8) des Datenanschlusses (4) über einen Widerstand (10) mit einem Massepotential (11) zu verbinden, sodass ein Ansteigen eines Spannungspegels der Datenleitung (8) auf einem vorbestimmten Wert verhindert ist.

2. Computersystem (1) nach Anspruch 1,
**dadurch gekennzeichnet, dass**
das Computersystem (1) ein BIOS aufweist, das zur Aktivierung bzw. Deaktivierung der Schaltungsanordnung (5) eingerichtet ist.

3. Computersystem (1) nach Anspruch 2,
**dadurch gekennzeichnet, dass**
das Computersystem (1) ein Betriebssystem aufweist und eine durch das Betriebssystem ausgeführte Aktivierung bzw. Deaktivierung der Schaltungsanordnung (5) verhinderbar ist.

4. Computersystem (1) nach Anspruch 3,
**dadurch gekennzeichnet, dass**
das BIOS dazu eingerichtet ist, eine Aktivierung bzw. Deaktivierung der Schaltungsanordnung (5) durch Mittel des Betriebssystems zu verhindern.

5. Computersystem (1) nach einem der Ansprüche 1 oder 2,
**dadurch gekennzeichnet, dass**
das Computersystem (1) ein Betriebssystem mit Mitteln zur Aktivierung bzw. Deaktivierung der Schaltungsanordnung (5) aufweist, wobei das Betriebssystem Mittel aufweist zur Sicherstellung, dass nur berechtigte Benutzer Zugriff auf die Schaltungsanordnung erhalten.

6. Computersystem (1) nach einem der Ansprüche 1 bis 5,
**dadurch gekennzeichnet, dass**
der wenigstens eine Datenanschluss (4) durch Unterdrücken einer Erkennung eines damit verbundenen Gerätes (2, 6) deaktivierbar ist.

7. Computersystem (1) nach einem der Ansprüche 1 bis 6,
**dadurch gekennzeichnet, dass**
die Schnittstellenvorrichtung (3) mehrere Datenanschlüsse (4) aufweist und die mehreren Datenanschlüsse (4) zusammen durch die Schaltungsanordnung (5) deaktiviert werden können.

8. Computersystem (1) nach einem der Ansprüche 1 bis 6,
**dadurch gekennzeichnet, dass**
die Schnittstellenvorrichtung (3) mehrere Datenanschlüsse (4) aufweist und je eine Schaltungsanordnung (5) je Datenanschluss (4) vorgesehen ist, durch die der zugehörige Datenanschluss (4) deaktivierbar ist.

9. Computersystem (1) nach einem der Ansprüche 1 bis 8,
**dadurch gekennzeichnet, dass**
die Schnittstellenvorrichtung (3) ein serielles Datenübertragungsverfahren einsetzt.

10. Computersystem (1) nach Anspruch 9,
**dadurch gekennzeichnet, dass**
die Schnittstellenvorrichtung (3) der USB (Universal Serial Bus) Spezifikation entspricht.

## Claims

1. Computer system (1) with an interface apparatus (3), having at least one data connection (4) for connecting devices (2, 6),
as well as a circuit arrangement (5) which can be used to deactivate the at least one data connection (4), the circuit arrangement (5) for deactivating the at least one data connection (4) being set up to connect at least one data line (8) of the data connection (4) to an earth potential (11) via a resistor (10), with the result that an increase in a voltage level of the data line (8) to a predetermined value is prevented.

2. Computer system (1) according to Claim 1,
**characterized in that**
the computer system (1) has a BIOS which is set up to activate or deactivate the circuit arrangement (5).

3. Computer system (1) according to Claim 2,
**characterized in that**
the computer system (1) has an operating system and activation or deactivation of the circuit arrangement (5), which is carried out by the operating system, can be prevented.

4. Computer system (1) according to Claim 3,
**characterized in that**
the BIOS is set up to prevent activation or deactivation of the circuit arrangement (5) using means of the operating system.

5. Computer system (1) according to either of Claims 1 and 2,
**characterized in that**
the computer system (1) has an operating system having means for activating or deactivating the circuit arrangement (5), the operating system having means for ensuring that only authorized users gain access to the circuit arrangement.

6. Computer system (1) according to one of Claims 1 to 5,
**characterized in that**
the at least one data connection (4) can be deactivated by suppressing detection of a device (2, 6) connected thereto.

7. Computer system (1) according to one of Claims 1 to 6,
**characterized in that**
the interface apparatus (3) has a plurality of data connections (4) and the plurality of data connections (4) can be deactivated together by the circuit arrangement (5).

8. Computer system (1) according to one of Claims 1 to 6,
**characterized in that**
the interface apparatus (3) has a plurality of data connections (4) and a circuit arrangement (5) is provided for each data connection (4), which circuit arrangement can be used to deactivate the associated data connection (4).

9. Computer system (1) according to one of Claims 1 to 8,
**characterized in that**
the interface apparatus (3) uses a serial data transmission method.

10. Computer system (1) according to Claim 9,
**characterized in that**
the interface apparatus (3) corresponds to the USB (Universal Serial Bus) specification.

## Revendications

1. Système informatique (1) comportant un dispositif d'interface (3), comprenant au moins une connexion de données (4) destinée au raccordement d'appareils (2, 6),
ainsi qu'un moyen à circuit (5) par l'intermédiaire duquel l'au moins une connexion de données (4) peut être désactivée, dans lequel le moyen à circuit (5) est configuré pour désactiver l'au moins une connexion de données (4) de telle manière qu'au moins une ligne de données (8) de la connexion de données (4) soit connectée par l'intermédiaire d'une résistance (10) à un potentiel de masse (11) afin d'éviter une augmentation d'un niveau de tension de la ligne de données (8) à une valeur prédéterminée.

2. Système informatique (1) selon la revendication 1, **caractérisé en ce que** le système informatique (1) comprend un BIOS qui est conçu pour activer ou désactiver le moyen à circuit (5).

3. Système informatique (1) selon la revendication 2, **caractérisé en ce que** le système informatique (1) comprend un système d'exploitation et **en ce qu'**une activation ou une désactivation du moyen à circuit (5) effectuée par le système d'exploitation peut être évitée.

4. Système informatique (1) selon la revendication 3, **caractérisé en ce que** le BIOS est conçu pour éviter une activation ou une désactivation du moyen à circuit (5) par des moyens du système d'exploitation.

5. Système informatique (1) selon la revendication 1 ou 2, **caractérisé en ce que** le système informatique (1) comprend un système d'exploitation comportant des moyens destinés à activer ou désactiver le moyen à circuit (5), dans lequel le système d'exploitation comprend des moyens destinés à faire en sorte que seuls des utilisateurs autorisés aient accès au moyen à circuit.

6. Système informatique (1) selon l'une quelconque des revendications 1 à 5, **caractérisé en ce que** l'au moins une connexion de données (4) peut être désactivée par inhibition d'une identification d'un appareil (2, 6) qui lui est connecté.

7. Système informatique (1) selon l'une quelconque des revendications 1 à 6, **caractérisé en ce que** le dispositif d'interface (3) comprend de multiples connexions de données (4) et **en ce que** les multiples connexions de données (4) peuvent être désactivées ensemble par l'intermédiaire du moyen à circuit (5).

8. Système informatique (1) selon l'une quelconque des revendications 1 à 6, **caractérisé en ce que** le dispositif d'interface (3) comprend de multiples connexions de données (4) et **en ce que** pour chaque connexion de données (4) est prévu un moyen à circuit respectif (5), par l'intermédiaire duquel la connexion de données concernée (4) peut être désactivée.

9. Système informatique (1) selon l'une quelconque des revendications 1 à 8, **caractérisé en ce que** le dispositif d'interface (3) met en oeuvre un procédé de transmission de données série.

10. Système informatique (1) selon la revendication 9, **caractérisé en ce que** le dispositif d'interface (3) correspond à la spécification USB (Universal Serial Bus).
